# EUROPEAN PATENT APPLICATION

(11) **EP 4 745 537 A1**
(43) Date of publication of application: **20.05.2026**
(21) Application number: 25215037.0
(22) Date of filing: 11.11.2025
(51) Int. Cl.: G01G 11/12, B65B 11/18, B65B 35/00, B65B 57/14

(54) **WEIGHING AND CONVEYING APPARATUS, AND WEIGHING, CONVEYING, AND PACKAGING APPARATUS**

(30) Priority: 13.11.2024 JP 2024198408
(71) Applicant: Ishida Co., Ltd., Kyoto-shi Kyoto 606-8392 (JP)
(72) Inventor: TAI, Yuuki, Ritto-shi, Shiga, 520-3026 (JP); HAYASHI, Masahiro, Ritto-shi, Shiga, 520-3026 (JP); SAWADA, Kosei, Ritto-shi, Shiga, 520-3026 (JP)
(74) Representative: Global IP Europe Patentanwaltskanzlei

(57) **Abstract**

Object

To provide a weighing and conveying apparatus (1), and a weighing, conveying, and packaging apparatus (100), which can expand the range of weight of an article that can be conveyed while ensuring safety.

Solution

A weighing and conveying apparatus (1) includes: a weighing unit (2) that weighs an article; a conveying unit (3) that conveys the article weighed by the weighing unit (2) by operating a drive motor (32); a conveying control unit (72) that starts conveyance of the article by the conveying unit (3) when a weight of the article weighed by the weighing unit (2) is not greater than an upper limit weight, or is less than the upper limit weight; a switching unit (71) that switches between conveying speeds of the conveying unit (3); and a storage unit (8) that stores the upper limit weight for each of the conveying speeds switched by the switching unit (71). The upper limit weight stored in the storage unit (8) is a weight of the article at which a load current generated in the drive motor (32) reaches an allowable maximum load current of the drive motor (32) when the article is conveyed at the corresponding one of the conveying speeds.

## Description

### Technical Field

One aspect of the present invention relates to a weighing and conveying apparatus, and a weighing, conveying, and packaging apparatus.

### Background Art

Patent Literature 1 describes a weighing and conveying apparatus (packaging apparatus), which includes a placement unit on which an article is placed (article to be packaged), a packaging unit for packaging the article, a conveying unit for conveying the article placed on the placement unit to the packaging unit, a detection unit for acquiring a load applied to a drive motor driving the conveying unit, and a determination unit for determining that the drive motor is in an overload state when the load acquired by the detection unit is not less than the reference load. In this configuration of the weighing and conveying apparatus, safety can be enhanced because the conveying of the article is stopped when an unintended load acts on the conveying motor.

### Citation List

### Patent Literature

Patent Literature 1: JP 2017-056989 A

### Summary of Invention

### Technical Problem

In such a weighing and conveying apparatus, in consideration of safety, it is conceivable to adopt a specification in which, when the article is conveyed at the predetermined conveying speed and when the load to be applied to the drive motor calculated from the conveying speed and the weight of the article is not less than the reference load, conveyance of the article cannot be started even when the article is placed on the conveying unit.

However, in this case, when the article is conveyed at the predetermined conveying speed and when the article whose weight exceeds the reference load of the drive motor is placed on the conveying unit, the conveyance by the conveying unit cannot be started. As a result, the range of article weights that can be conveyed by the weighing and conveying apparatus becomes limited. In particular, during periods when families gather, for example, users often need to weigh articles that are heavier than what are originally anticipated. In such a case, when the conveyance of the article is not started because the conveying unit is overloaded, the article needs to be packaged manually, and thus productivity is lowered.

Thus, an object of one aspect of the present disclosure is to provide a weighing and conveying apparatus and a weighing, conveying, and packaging apparatus, which makes it possible to expand the range of weight of the articles that can be conveyed while ensuring safety.

### Solution to Problem

(1) A weighing and conveying apparatus according to one aspect of the present disclosure includes: a weighing unit that weighs an article; a conveying unit that conveys the article weighed by the weighing unit by operating a drive motor; a conveying control unit that starts conveyance of the article by the conveying unit when a weight of the article weighed by the weighing unit is not greater than an upper limit weight, or is less than the upper limit weight; a switching unit that switches between conveying speeds of the conveying unit; and a storage unit that stores the upper limit weight for each of the conveying speeds switched by the switching unit. The upper limit weight stored in the storage unit is a weight of the article at which a load current generated in the drive motor reaches an allowable maximum load current of the drive motor when the article is conveyed at the corresponding one of the conveying speeds.
   In the weighing and conveying apparatus of this configuration, different upper limit weights are stored for different conveying speeds, respectively. Even when the weight of the article exceeds one upper limit weight, another upper limit weight can be set by switching the conveying speed. When another upper limit weight upon switching of the conveying speed is not less than the weight of the article weighed by the weighing unit, that is, the weight of the article is not greater than the above another upper limit weight, the conveying control unit starts conveying the article in the conveying unit. This makes it possible to expand the range of weight of the article that can be conveyed by the conveying unit by switching the conveying speed, while ensuring safety by not starting conveyance, when the weight of the article exceeds the upper limit weight.
(2) In the weighing and conveying apparatus according to the above (1), the switching unit may be able to switch the conveying speeds between a first conveying speed and a second conveying speed that is slower than the first conveying speed. A first upper limit weight corresponding to the first conveying speed may be a weight at which a load current of the drive motor generated during conveyance of the article at the first conveying speed reaches an allowable maximum load current of the drive motor. A second upper limit weight corresponding to the second conveying speed may be greater than the first upper limit weight and may be a weight at which a load current of the drive motor generated during conveyance of the article at the second conveying speed reaches the allowable maximum load current of the drive motor. In this configuration, the first upper limit weight is stored for the first conveying speed, and the second upper limit weight greater than the first upper limit weight is stored for the second conveying speed slower than the first conveying speed. Thus, even when the weight of the article exceeds the first upper limit weight, the article can be conveyed by switching to the second conveying speed, which corresponds to the second upper limit weight greater than the first upper limit weight.
(3) The weighing and conveying apparatus according to the above (1) or (2) may further include a display unit that indicates that a weight of the article is greater than the upper limit weight when the weight of the article is greater than the upper limit weight corresponding to one of the conveying speeds. This configuration makes it possible for the user to recognize that the weight of the article is greater than the upper limit weight via the display of the display unit, thereby can take measures such as switching the conveying speed. This makes it possible to operate the weighing and conveying apparatus more safely.
(4) In the weighing and conveying apparatus according to any one of the above (1) to (3), the switching unit may switch the conveying speeds to one of the conveying speeds corresponding to the upper limit weight greater than a weight of the article when the weight of the article weighed by the weighing unit is greater than the upper limit weight corresponding to one of the conveying speeds. In this configuration, the article is conveyed at the conveying speed corresponding to the upper limit weight exceeding the weight of the article, so that the article can be conveyed quickly while ensuring safety.
(5) The weighing and conveying apparatus according to any one of the above (1) to (4) may further include a selection unit that selects either a first mode or a second mode. The first mode may be selected by the selection unit to cause the conveying control unit to execute control to start conveyance of the article by the conveying unit, based on the upper limit weight corresponding to one of the conveying speeds switched by the switching unit and a weight of the article, and to execute control to stop the conveyance of the article, based on a load current of the drive motor and a first allowable load current stored in the storage unit. The second mode may be selected by the selection unit to cause the conveying control unit to execute control to start conveyance of the article by the conveying unit, based on a single upper limit weight stored in the storage unit regardless of the conveying speeds switched by the switching unit, and to execute control to stop the conveyance of the article, based on a load current of the drive motor and a second allowable load current stored in the storage unit for each of the conveying speeds. This configuration makes it possible to select the first mode in which a heavier article can be conveyed when the conveying speed is reduced, or the second mode in which the safety at the time of conveyance of the articles can be enhanced although the heavier article cannot be conveyed even when the conveying speed is reduced. By appropriately selecting the mode, it is possible to switch the single specification of the weighing and conveying apparatus to the specification that emphasizes productivity or the specification that emphasizes safety.
(6) A weighing, conveying, and packaging apparatus according to one aspect of the present disclosure includes: the weighing and conveying apparatus according to any one of the above (1) to (5); and a packaging unit disposed downstream of the conveying unit. The packaging unit packages the article with a film and discharges the packaged article. In the weighing, conveying, and packaging apparatus of this configuration, the article conveyed by the conveying unit can be packaged with a film.

### Advantageous Effects of Invention

According to one aspect of the present invention, it is possible to expand the range of weight of articles that can be conveyed while ensuring safety.

### Brief Description of Drawings

FIG. 1 is a perspective view illustrating a weighing, conveying, and packaging apparatus according to a first embodiment.
FIG. 2 is a block diagram of the weighing and conveying apparatus of FIG. 1.
FIG. 3 is a diagram illustrating an example of an allowable maximum load current.
FIG. 4 is a flowchart illustrating an operation of the weighing, conveying, and packaging apparatus.
FIG. 5 is a diagram illustrating a warning message displayed on a display unit.
FIG. 6 is a diagram illustrating an example of a second allowable load current.
FIG. 7 is a flowchart illustrating an operation of a weighing and conveying apparatus according to a second embodiment.
FIG. 8 is a flowchart illustrating an operation of a weighing and conveying apparatus according to a modified example.

### Description of Embodiments

Hereinafter, a weighing, conveying, and packaging apparatus 100 including a weighing and conveying apparatus 1 of a first embodiment according to one aspect of the present invention will be described in detail with reference to the drawings. In the description of the drawings, the same reference signs are assigned to the same elements, and duplicate descriptions will be omitted.

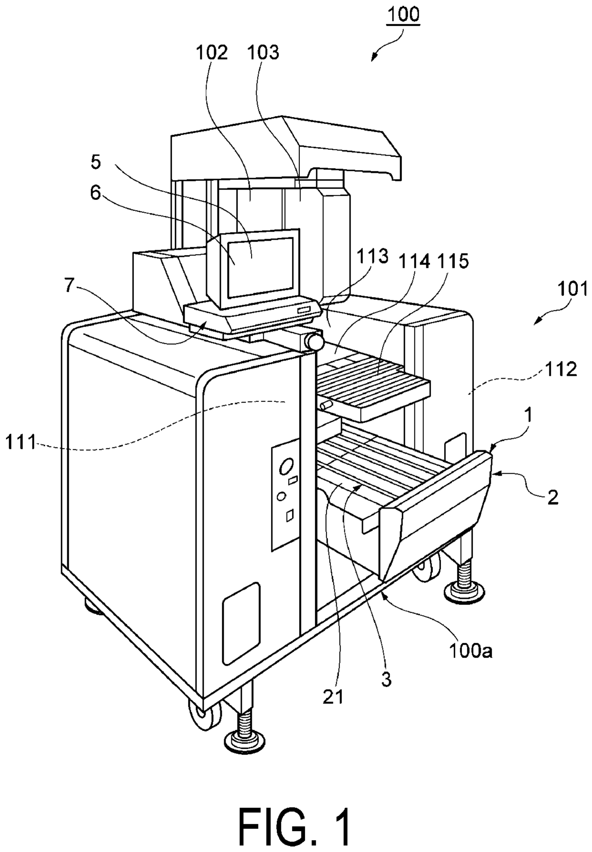

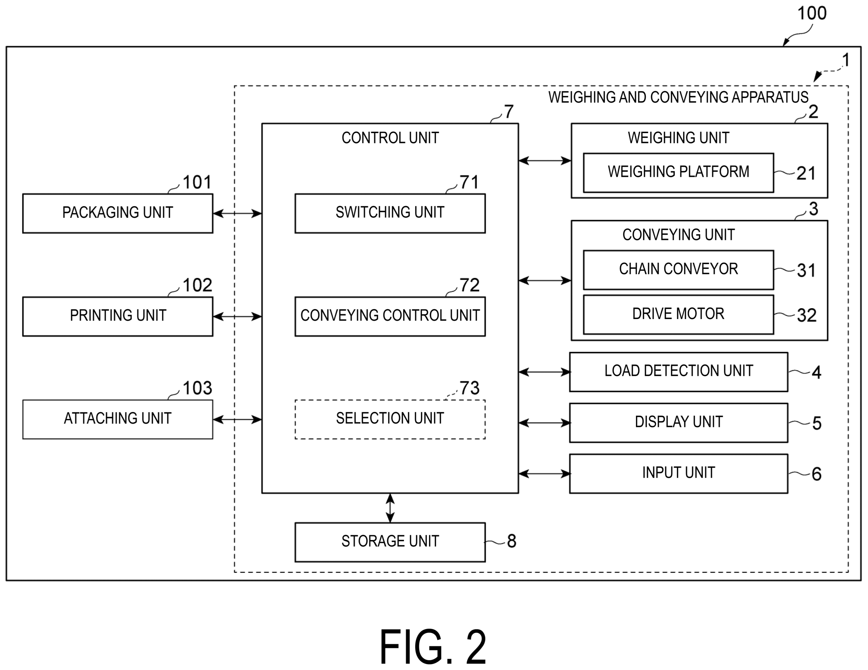

The weighing, conveying, and packaging apparatus 100 illustrated in FIGS. 1 and 2 is an apparatus that weighs an article, then packages the weighed article with a stretch film, and issues a product label on which information about the article is printed and attaches the product label to the stretch film. An article refers to an unpackaged article to be weighed. A product refers to a packaged article to be weighed. The weighing, conveying, and packaging apparatus 100 includes: a weighing and conveying apparatus 1 that weighs an article, which is then conveyed; a packaging unit 101 that packages the article, which is weighed and conveyed by the weighing and conveying apparatus 1, with a stretch film and discharges the packaged article; a printing unit 102 that issues a product label, based on information related to the product; and an attaching unit 103 that attaches the product label issued by the printing unit 102 to the film in which the product is packaged. Various operations of the weighing, conveying, and packaging apparatus 100 are controlled by a control unit 7 described below.

The weighing and conveying apparatus 1 includes: a weighing unit 2 that weighs a weight of an article; a conveying unit 3 that conveys the article weighed by the weighing unit 2; a load detection unit 4 that detects a load applied to the conveying unit 3; a display unit 5 that displays various types of information for a user; an input unit 6 that receives user operations; the control unit 7; and a storage unit 8 that stores information necessary for an operation of the weighing, conveying, and packaging apparatus 100. The weighing unit 2 is provided at the front center of a main body 100a. The weighing unit 2 includes a weighing platform 21 that is loaded to a load sensor such as a load cell and weighs the weight of an article such as food placed on a tray. When an article is placed on the weighing platform 21, a weight of the article is weighed by the load sensor supporting the weighing platform 21. The weighing unit 2 outputs the weight of the article, which is the weighed value, to the control unit 7.

The conveying unit 3 conveys the article placed on the weighing platform 21 to the packaging unit 101. The conveying unit 3 includes: a chain conveyor 31 that conveys the article placed on the weighing platform 21 to the packaging unit 101 while pushing the back of the article, for example, with a conveying bar; and a drive motor 32 that drives the chain conveyor 31. The drive motor 32 operates to convey the article to the packaging unit 101. When conveying the article from the weighing platform 21 to the packaging unit 101, the conveying unit 3 accelerates to a predetermined conveying speed at a predetermined acceleration, conveys the article at the predetermined conveying speed for a certain time, and then decelerates at a predetermined deceleration to stop. The same value of acceleration is set for any of the conveying speeds. Different values of acceleration may be set for each of the conveying speeds. The same value of deceleration is set for any of the conveying speeds. Different values of deceleration may be set for each of the conveying speeds. In the first embodiment, the conveying unit 3 is configured such that the predetermined conveying speed when conveying the article from the weighing platform 21 to the packaging unit 101 can be switched into three levels: "low speed", "medium speed" that is faster than "low speed", and "high speed" that is faster than "medium speed". The number of levels in which the conveying speed of the conveying unit 3 can be switched may be two stages, more than three levels, or level-less so as to allow the conveying speed to be changed continuously. Each of the plurality of conveying speeds is stored in the storage unit 8.

The load detection unit 4 detects the load (conveying load) applied to the drive motor 32. The conveying load is the load generated in the drive motor 32 while the conveying bar pushes and conveys the article from the weighing platform 21 to the packaging unit 101. The conveying load is the load corresponding to the force by which the conveying bar pushes the article. A current corresponding to the conveying load is applied to the drive motor 32. More specifically, a larger current is applied to the drive motor 32 as the conveying load increases. In the first embodiment, the load detection unit 4 measures the current (load current) applied to the drive motor 32. The measured value of the load current measured by the load detection unit 4 is output to the control unit 7. In the first embodiment, the display unit 5 and the input unit 6 are integrally configured, and are touch panels that can display various information for the user and accept user operations. Details of the control unit 7 will be described below.

The packaging unit 101 is arranged downstream of the conveying unit 3. The packaging unit 101 includes: a lift mechanism 111 that lifts the article to a predetermined position; a film roll support mechanism 112 that supports the stretch film; a film feeding mechanism 113 that feeds the stretch film to a predetermined position; a folding mechanism 114 that folds the stretch film to the bottom side of the article; and a sealing mechanism 115 for sealing the stretch film.

The lift mechanism 111 elevates the article received from the weighing unit 2 to a predetermined position and lifts the stretch film stretched to a predetermined position by the film feeding mechanism 113 from below. The folding mechanism 114 packages the article by folding the stretch film lifted by the article to the bottom side of the article. The sealing mechanism 115 thermally seals the stretch film folded to the bottom side of the product by the folding mechanism 114.

The printing unit 102 is arranged above the folding mechanism 114 and the sealing mechanism 115. The printing unit 102 is integrally configured with the attaching unit 103. The printing unit 102 acquires printing information to be printed on a label from a printing memory. A label roll in which a label is wound around a core material or the like, is stored in the printing unit 102, and a product label is issued by printing, on the label delivered from the label roll, information based on the printing information. The label may be a label with a liner, on which a liner is attached, or a liner-less label, on which a liner is not attached.

The attaching unit 103 is provided so as to be movable between the printing unit 102 and the product to which the product label is to be attached. The attaching unit 103 attaches the product label received from the printing unit 102 to a predetermined position on the product packaged with a film. Note that the weighing, conveying, and packaging apparatus 100 may not include the printing unit 102 and the attaching unit 103.

As illustrated in FIGS. 1 and 2, the control unit 7 is arranged at the top of the main body 100a. The control unit 7 controls various operations of the weighing, conveying, and packaging apparatus 100. That is, the control unit 7 controls various operations in the weighing and conveying apparatus 1 and various operations in the packaging unit 101, the printing unit 102, and the attaching unit 103. The control unit 7 may control only the various operations in the weighing and conveying apparatus 1, and the various operations in the packaging unit 101, the printing unit 102, and the attaching unit 103 may be controlled by a control unit different from the control unit 7.

In the control unit 7, CPU (Central Processing Unit), ROM (Read Only Memory), and RAM (Random Access Memory) are mutually connected via bus lines such as an address bus and a data bus. For example, the control unit 7 may be configured as software in which a program stored in the ROM is loaded onto the RAM and executed by the CPU. The control unit 7 may be configured as hardware using an electronic circuit or the like. In the control unit 7, a switching unit 71 for switching the conveying speed of the conveying unit 3, and a conveying control unit 72 for controlling the conveyance of an article by the conveying unit 3 are formed by the cooperation of hardware such as the CPU and the main storage unit and software such as a program.

The switching unit 71 receives switching of the conveying speed via a conveying speed switching screen (not illustrated) displayed on the display unit 5. In the conveying speed switching screen, for example, any conveying speed (in the first embodiment, "low speed", "medium speed" and "high speed") can be selected from a plurality of conveying speeds stored in advance. The conveying speed is selected via the input unit 6. The switching unit 71 stores the conveying speed thus received as a set value in, for example, a RAM, the storage unit 8, or the like. The switching unit 71 may be configured by a physical switch button or a switch provided on the main body 100a.

The conveying control unit 72 starts conveyance of the article by the conveying unit 3, and controls the conveying unit 3 according to the conveying speed switched (set) by the switching unit 71. The conveying control unit 72 executes control for starting conveyance of the article by the conveying unit 3, based on the upper limit weight corresponding to the conveying speed switched by the switching unit 71 and a weight of the article weighed by the weighing unit 2 (hereinafter, also referred to simply as "conveying start control"). The conveying control unit 72 starts conveyance of the article by the conveying unit 3 when the weight of the article weighed by the weighing unit 2 is not greater than the upper limit weight. The conveying control unit 72 does not start conveyance of the article by the conveying unit 3 when the weight of the article weighed by the weighing unit 2 is greater than the upper limit weight. The conveying control unit 72 may not start conveyance of the article by the conveying unit 3 when the weight of the article weighed by the weighing unit 2 is not less than the upper limit weight, and may start conveyance of the article by the conveying unit 3 when the weighed value of the article weighed by the weighing unit 2 is less than the upper limit. The upper limit weight corresponding to each of the plurality of conveying speeds is stored in the storage unit 8. Specifically, the upper limit weight corresponding to each of "high speed", "medium speed" and "low speed" is stored in the storage unit 8.

The upper limit weight is specified for each conveying speed. The upper limit weight is the weight of the article, when the load current generated in the drive motor 32 once the article is conveyed at the corresponding conveying speed reaches the allowable maximum load current of the drive motor 32. As the conveying speed increases, the upper limit weight decreases. In the first embodiment, the upper limit weight when the conveying speed is "high speed" is, for example, 6.0 kg, the upper limit weight when the conveying speed is "medium speed" is, for example, 6.5 kg, and the upper limit weight when the conveying speed is "low speed" is, for example, 7.0 kg.

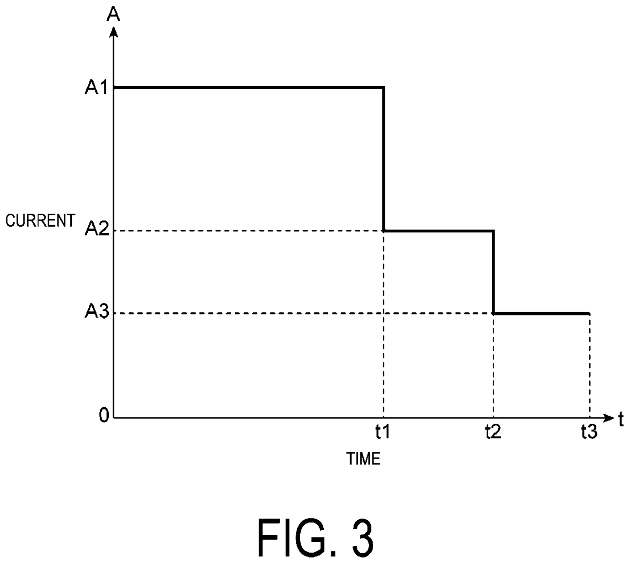

When the drive motor 32 of the conveying unit 3 is operated to convey the article, a load current flows through the drive motor 32. The allowable maximum load current illustrated in FIG. 3 is, for example, set as the maximum load current that flows when the user resists to prevent the user's hand that has been caught in the conveying unit 3 from being drawn into the apparatus. The allowable maximum load current in this case is set in levels corresponding to the change in the load current that is generated during conveyance of the article, but can be set optionally or legally as appropriate in consideration of the safety of the user. The allowable maximum load current corresponding to each of the plurality of conveying speeds is stored in the storage unit 8.

After conveyance is started by the conveying start control described above, the conveying control unit 72 executes control to stop conveyance of the article, based on the load current of the drive motor 32 and the allowable maximum load current. After conveyance of the article is started by the conveying unit 3, when the value of the load current measured by the load detection unit 4 becomes higher than the allowable maximum load current, the conveying control unit 72 executes control to stop the conveyance of the article by the conveying unit 3 urgently (hereinafter, this control is also referred to simply as "conveying stop control").

In FIG. 3, when conveyance of the article is started by the conveying unit 3, the load current becomes the highest when the stationary article is accelerated to a predetermined conveying speed (0 to t1), the load current becomes smaller when the article is conveyed at the predetermined conveying speed (t1 to t2) for a while thereafter, and then the load current becomes even smaller when the article is decelerated to stop at the packaging unit 101 (t2 to t3). Thus, the allowable maximum load current is set in three levels as illustrated in FIG. 3.

Specifically, in the known conveying stop control, the allowable maximum load current is set to a current value A1 for the entire period (t: 0 to t3). However, as described above, the load current changes in levels according to the acceleration period, the constant speed period, and the deceleration period. Thus, in the present embodiment, in accordance with such trends, as illustrated in FIG. 3, the allowable maximum load current in the period of time t from 0 to t1 is set to the current value A1, the allowable maximum load current in the period of time t from t1 to t2 is set to a current value A2, which is smaller than the current value A1, and the allowable maximum load current in the period of time t from t2 to t3 is set to a current value A3, which is smaller than the current value A2. The conveying stop control according to the first embodiment is performed based on the current value pattern (first allowable load current) consisting of the current value A1, the current value A2, and the current value A3. The first allowable load current is stored in the storage unit 8 or the like.

For example, when the weight of the article is greater than the upper limit weight corresponding to the conveying speed output from the switching unit 71, the display unit 5 displays that the weight of the article is greater than the upper limit weight.

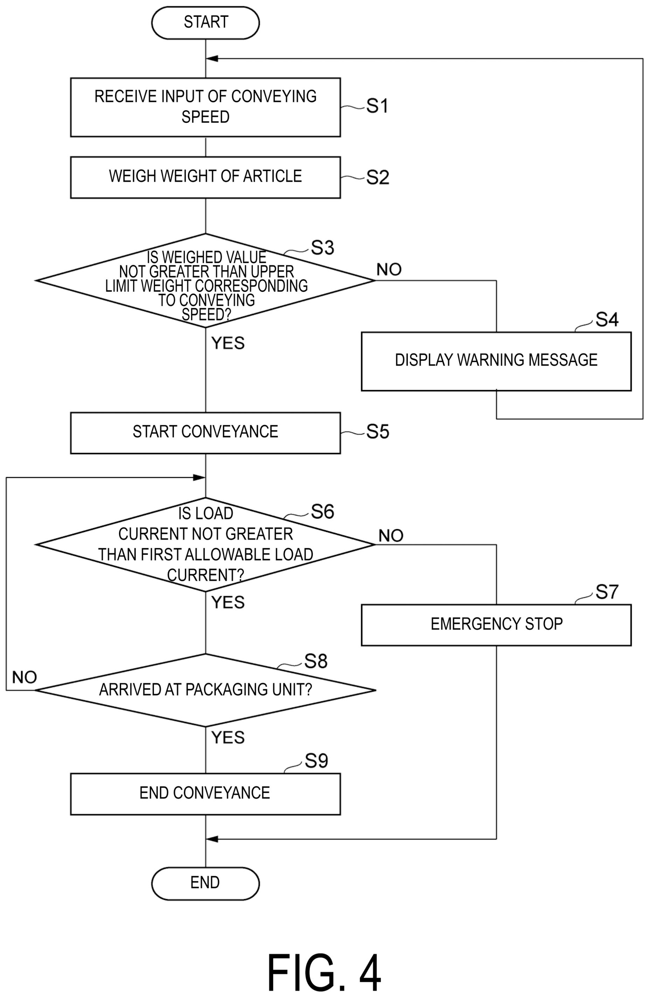

Next, the operation of the weighing and conveying apparatus 1 illustrated in FIG. 4 will be described. The user selects the conveying speed from the conveying speed switching screen displayed on the touch panel. The user selects "high speed" as the conveying speed, for example. The switching unit 71 receives the input of the conveying speed through the operation of the touch panel by the user (step S1). Subsequently, the user places the article on the weighing platform 21. The weighing unit 2 weighs the weight of the article (step S2). The weighing unit 2 outputs the weight of the article, which is the weighed value, to the control unit 7. More specifically, the weighing unit 2 outputs the weight of the article, which is the weighed value, to the conveying control unit 72.

Subsequently, the conveying control unit 72 determines whether conveyance can be started by the conveying unit 3, based on the weight of the article weighed by the weighing unit 2 and the conveying speed switched by the switching unit 71 (step S3). When the weight of the article weighed by the weighing unit 2 is greater than the upper limit weight corresponding to the conveying speed switched by the switching unit 71 (step S3: NO), the conveying control unit 72 does not allow the conveyance to start by the conveying unit 3. More specifically, when the weight of the article weighed by the weighing unit 2 is greater than the upper limit weight (6.0 kg) corresponding to the "high speed" that is a conveying speed switched by the switching unit 71, the conveying control unit 72 does not allow the conveyance to start by the conveying unit 3.

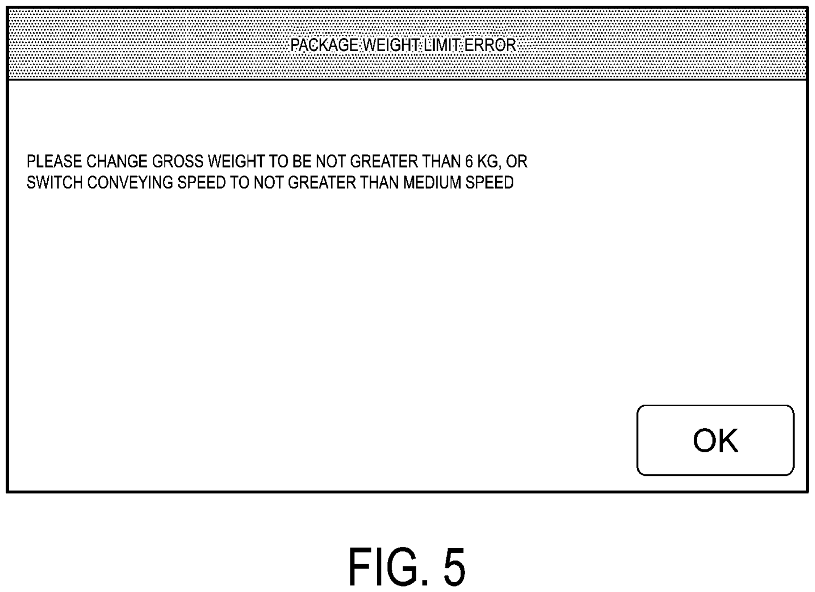

Subsequently, the display unit 5 displays a warning message (step S4). As illustrated in FIG. 5, the display unit 5 displays a package weight limit error as a message. The package weight limit error includes information on operating conditions for allowing the conveying unit 3 to convey the article safely. The operating conditions for allowing the conveying unit 3 to convey the article safely include, for example, adjusting the weight of the article so as to reach not greater than the upper limit weight, and reducing the conveying speed. In the example illustrated in FIG. 5, the user is instructed to adjust the weight of the article such that the weight of the article is not greater than 6.0 kg and to set the conveying speed to not greater than "medium speed".

After the display unit 5 displays the warning message, the switching unit 71 receives the input of the conveying speed through the operation of the touch panel by the user (step S1). This allows the user to select the conveying speed that is slower than the previously selected conveying speed. When the weight of the article placed on the weighing platform 21 is not reduced and the conveying speed is switched to a conveying speed that is slower than the previously selected conveying speed, steps S1 to S4 are repeated until the upper limit weight corresponding to the conveying speed after the switching reaches not less than the weight of the article weighed by the weighing unit 2.

When the weight of the article placed on the weighing platform 21 is reduced after step S4, the switching unit 71 may execute step S2 without receiving the input of the conveying speed through the operation of the touch panel by the user. When the weight of the article reweighed by the weighing unit 2 is not greater than the upper limit weight, the conveying control unit 72 starts conveying the article by the conveying unit 3.

When the weight of the article reweighed by the weighing unit 2 is not greater than the upper limit weight corresponding to the conveying speed (step S3: YES), the conveying control unit 72 starts conveying the article by the conveying unit 3 (step S5). The conveying control unit 72 drives the drive motor 32, based on the conveying speed switched by the switching unit 71. Subsequently, the conveying control unit 72 determines whether the current flowing through the drive motor 32 is not greater than the first allowable load current (step S6). The load detection unit 4 continuously monitors the load current while the conveying unit 3 is conveying the article from the weighing platform 21 to the packaging unit 101, and outputs the monitored result to the conveying control unit 72. The conveying control unit 72 determines whether the load current detected by the load detection unit 4 at the time t is not greater than the first allowable load current at the time t.

On the other hand, when the conveying control unit 72 determines that the load current output from the load detection unit 4 is greater than the first allowable load current (step S6: NO), the conveying control unit 72 urgently stops the drive motor 32 (step S7).

When the conveying control unit 72 determines that the load current output from the load detection unit 4 is not greater than the first allowable load current (step S6: YES), the conveying control unit 72 determines whether the article has arrived at the packaging unit 101 (step S8). When the conveying control unit 72 determines that the article has not arrived at the packaging unit 101 (step S8: NO), the conveying control unit 72 causes the conveying unit 3 to continue conveying the article until the article arrives at the packaging unit 101.

When the conveying control unit 72 determines that the article has arrived at the packaging unit 101 (step S8: YES), the conveying control unit 72 causes the conveying unit 3 to end conveying the article (step S9). In the weighing, conveying, and packaging apparatus 100, the packaging unit 101 packages the article that has arrived at the packaging unit 101 with a film and discharges the packaged article. Then, the printing unit 102 issues the product label, based on the information about the product discharged during that time. When the packaged product is being discharged to the sealing mechanism 115, the attaching unit 103 attaches the product label on the film of the packaged product.

The operation and effect of the weighing and conveying apparatus 1 and the weighing, conveying, and packaging apparatus 100 in the first embodiment will be described. In the weighing and conveying apparatus 1 in the first embodiment, different upper limit weights are respectively stored for different conveying speeds. Even when the weight of the article exceeds one upper limit weight, another upper limit weight can be set by switching the conveying speed. When another upper limit weight upon switching of the conveying speed is not less than the weight of the article weighed by the weighing unit 2, the conveying control unit 72 starts conveying the article in the conveying unit 3. This can expand the range of weight of the article that can be conveyed by the conveying unit 3 while ensuring safety by not starting conveyance when the weight of the article exceeds the upper limit weight.

In the weighing and conveying apparatus 1 of the first embodiment, the switching unit 71 can switch the conveying speed between "high speed", "medium speed", and "low speed", and the upper limit weight corresponding to the "medium speed" is greater than the upper limit weight corresponding to the "high speed". The upper limit weight corresponding to "low speed" is greater than the upper limit weight corresponding to "medium speed". In this configuration, even when the weight of the article exceeds the upper limit weight corresponding to "high speed", the article can be conveyed by switching to "medium speed" or "low speed" corresponding to the upper limit weight greater than the upper limit weight corresponding to "high speed".

The weighing and conveying apparatus 1 according to the first embodiment, further includes the display unit 5 that displays a message announcing that the weight of the article is greater than the upper limit weight when the weight of the article is greater than the upper limit weight corresponding to the conveying speed, as illustrated in FIG. 5, for example. This configuration makes it possible for the user to recognize that the weight of the article is greater than the upper limit weight via the display unit 5, thereby can take measures such as switching the conveying speed. The weighing and conveying apparatus 1 can be operated more safely.

In the weighing, conveying, and packaging apparatus 100 according to the first embodiment, the article conveyed by the conveying unit 3 can be packaged with a film.

Next, the weighing, conveying, and packaging apparatus 100 including the weighing and conveying apparatus 1 of the second embodiment according to one aspect of the present invention will be described in detail. In addition to the configuration of the weighing, conveying, and packaging apparatus 100 including the weighing and conveying apparatus 1 of the first embodiment, in the weighing, conveying, and packaging apparatus 100 including the weighing and conveying apparatus 1 of the second embodiment, a selection unit 73 for selecting a first mode or a second mode is further formed in the control unit 7 by cooperation of hardware such as a CPU and a main storage unit and software such as a program. In FIG. 2, the selection unit 73 is indicated by a broken line, which means that the selection unit 73 is not included in the first embodiment but is included in the second embodiment.

Similarly to the switching unit 71 of the first embodiment, the selection unit 73 accepts the selection of a first mode or a second mode through a mode switching screen (not illustrated) displayed on the display unit 5. The selection of the first mode or the second mode is performed through the input unit 6. The selection unit 73 stores the selection of the first mode or the second mode thus received in a RAM, the storage unit 8, or the like, for example. The selection unit 73 may be configured by a physical mode switching button or a selection switch, which are provided on the main body 100a.

When the first mode is selected by the selection unit 73, the conveying control unit 72 executes control to start conveyance of the article in the conveying unit 3, based on the upper limit weight corresponding to the conveying speed switched by the switching unit 71. The conveying control unit 72 executes control to stop conveyance of the article, based on the load current of the drive motor 32 and the above-described first allowable load current stored in the storage unit 8. That is, the first mode is a mode achieved by the configuration of the first embodiment. Thus, a detailed description of the first mode is omitted.

When the second mode is selected by the selection unit 73, the conveying control unit 72 executes control to start conveyance of the article in the conveying unit 3, based on a single upper limit weight stored in the storage unit 8 regardless of the conveying speed switched by the switching unit 71. The conveying control unit 72 executes control to start conveyance of the article in the conveying unit 3, based on, for example, the upper limit weight (e.g., 6.0 kg) when "high speed" is selected in the switching unit 71 of the first embodiment, regardless of the conveying speed switched by the switching unit 71. In the first embodiment, when the article weighing not less than 6.0 kg is placed on the weighing platform 21, conveyance is started once the conveying speed is switched to "medium speed" even when conveyance is not started at the conveying speed of "high speed". However, in the second embodiment, conveyance of the article weighing more than 6 kg is not started even when the conveying speed is switched to "medium speed".

When the second mode is selected by the selection unit 73, the conveying control unit 72 executes control to stop conveyance of the article, based on the load current of the drive motor 32 and the second allowable load current stored in the storage unit 8 for each conveying speed switched by the switching unit 71. The second allowable load current is stored in the storage unit 8.

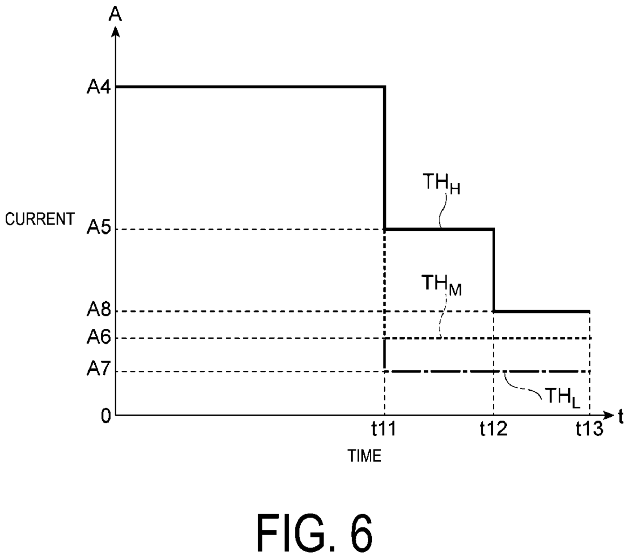

As illustrated in FIG. 6, the second allowable load current includes an allowable load current TH_{H} corresponding to the conveying speed "high speed", an allowable load current TH_{M} corresponding to the conveying speed "medium speed", and an allowable load current TH_{L} corresponding to the conveying speed "low speed". Note that t11, t12, and t13 at time t illustrated in FIG. 6 correspond to t1, t2, and t3 illustrated in FIG. 3, respectively.

Specifically, the allowable load current TH_{H}, TH_{M}, and TH_{L} at the time t from 0 to t11 are a current value A4, and the values of the allowable load current TH_{H}, TH_{M}, and TH_{L} are equal to each other. The current value A4 may be the same as the current value A1 (allowable maximum load current corresponding to the conveying speed "high speed") of the first embodiment (see FIG. 3). The allowable load currents TH_{H}, TH_{M}, and TH_{L} at the time t from t11 to t12 are smaller than the current value A4. Specifically, the allowable load current TH_{H} at the time t from t11 to t12 is a current value A5. The allowable load current TH_{H} at the time t from t12 to t13 is a current value A8, which is smaller than the current value A5. The allowable load current TH_{M} at the time t from t11 to t12 is a current value A6, which is smaller than the current value A5. The allowable load current TH_{L} at the time t from t11 to t12 is a current value A7, which is smaller than the current value A6. Note that the above allowable load currents TH_{H}, TH_{M}, and TH_{L} are described by using an example in which the current value is set such that the current value is gradually decreased, but it is possible to set the current value as appropriate such that the current value is increased on the way.

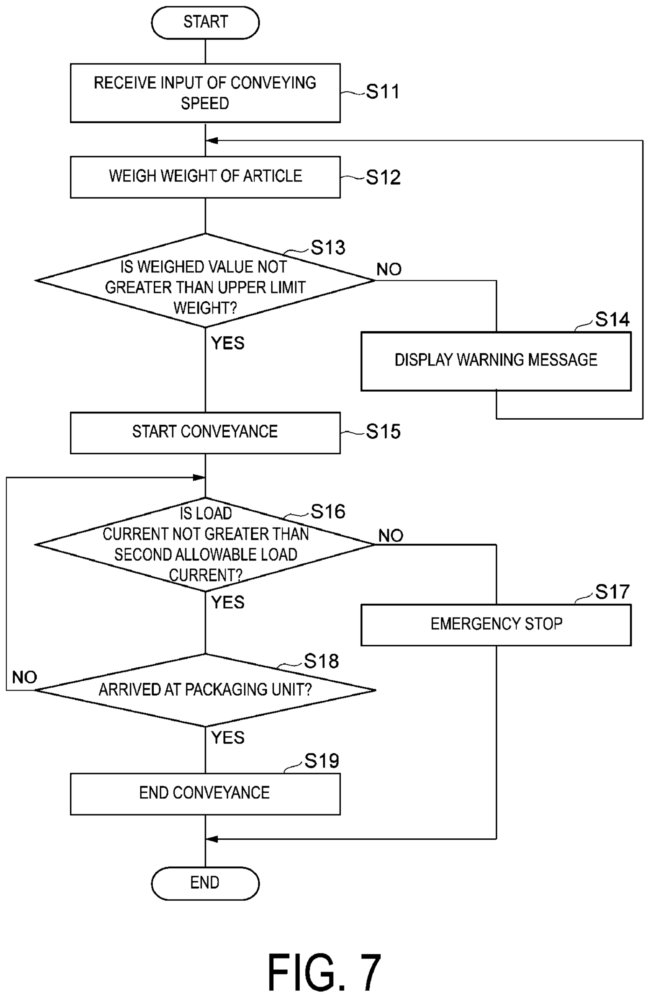

The operation of the weighing and conveying apparatus 1 when the first mode is selected is the same as that of the weighing and conveying apparatus 1 described in the first embodiment, and is thus omitted. Next, the operation of the weighing and conveying apparatus 1 when the second mode is selected will be described mainly with reference to FIG. 7. The user selects the conveying speed from the conveying speed switching screen displayed on the touch panel. The switching unit 71 receives the input of the conveying speed through the operation of the touch panel by the user (step S11). Subsequently, the user places the article on the weighing platform 21. The weighing unit 2 weighs the weight of the article (step S12). The weighing unit 2 outputs the weighed value, which is the weight of the article, to the control unit 7. More specifically, the weighing unit 2 outputs the weight of the article, which is the weighed value, to the conveying control unit 72.

Subsequently, the conveying control unit 72 determines whether to allow the conveying unit 3 to start conveyance, based on a single upper limit weight stored in the storage unit 8 regardless of the conveying speed switched by the switching unit 71 (step S13). When the weight of the article weighed by the weighing unit 2 is greater than the upper limit weight (step S13: NO), the conveying control unit 72 does not allow the conveying unit 3 to start conveyance.

Subsequently, the display unit 5 displays a warning message (step S14). The display unit 5 displays a package weight limit error as a message. The package weight limit error includes information on operating conditions for allowing the conveying unit 3 to convey the product safely. The operating conditions for allowing the conveying unit 3 to convey the product safely include, for example, adjusting the weight of the article so as to reach not greater than the upper limit weight.

The user places the article whose weight is lighter than the previous article. When the weight of the article reweighed by the weighing unit 2 is not greater than the upper limit weight (step S13: YES), the conveying control unit 72 causes the conveying unit 3 to start conveyance (step S15). The conveying control unit 72 drives the drive motor 32, based on the conveying speed switched by the switching unit 71. Subsequently, the conveying control unit 72 determines whether the load current flowing through the drive motor 32 is not greater than the second allowable load current (step S16). The load detection unit 4 constantly monitors the load current during the period when the conveying unit 3 conveys the article from the weighing platform 21 to the packaging unit 101, and outputs the monitored result to the conveying control unit 72. The conveying control unit 72 determines whether the load current detected by the load detection unit 4 at the time t is not greater than the second allowable load current at the time t.

The conveying control unit 72 compares the load current with any one of the plurality of allowable load currents included in the second allowable load currents. Which of the second allowable load currents is adopted is determined by the conveying speed input to the input unit 6. If the conveying speed input to the input unit 6 is "high speed", the conveying control unit 72 adopts the allowable load current TH_{H}, if the conveying speed input to the input unit 6 is "medium speed", the conveying control unit 72 adopts the allowable load current TH_{M}, and if the conveying speed input to the input unit 6 is "low speed", the conveying control unit 72 adopts the allowable load current TH_{L}.

On the other hand, if the conveying control unit 72 determines that the load current output from the load detection unit 4 is greater than the second allowable load current (step S16: NO), the conveying control unit 72 urgently stops the drive motor 32 (step S17).

If the conveying control unit 72 determines that the load current output from the load detection unit 4 is not greater than the second allowable load current (step S16: YES), the conveying control unit 72 determines whether the product has arrived at the packaging unit 101 (step S18). If the conveying control unit 72 determines that the product has not arrived at the packaging unit 101 (step S18: NO), the conveying control unit 72 causes the conveying unit 3 to continue conveying the product until the product arrives at the packaging unit 101.

If the conveying control unit 72 determines that the product has arrived at the packaging unit 101 (step S18: YES), the conveying control unit 72 causes the conveying unit 3 to end conveying the product (step S19). Since the description after step S19 is the same as that of the first embodiment, the detailed description will be omitted here.

According to the weighing and conveying apparatus of the second embodiment, it is possible to select the first mode in which a heavier product can be conveyed when the conveying speed is reduced, or the second mode in which the safety at the time of conveyance of the articles can be enhanced although the heavier product cannot be conveyed even when the conveying speed is reduced. By appropriately selecting the mode, this makes it possible to switch the single specification of the weighing and conveying apparatus to the specification that emphasizes productivity or the specification that emphasizes safety.

Although the first and second embodiments have been described above, one aspect of the present disclosure is not limited to the first and second embodiments. Various modifications can be made without departing from the spirit of the disclosure.

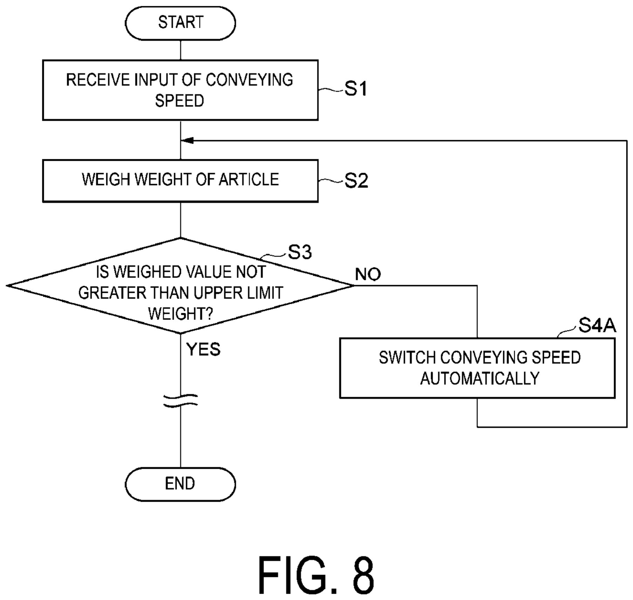

Next, a weighing and conveying apparatus according to a modified example will be described. In the weighing and conveying apparatus according to the modified example, the switching unit 71 switches to the conveying speed corresponding to the upper limit weight greater than the weight of the article when the weight of the article weighed by the weighing unit 2 is greater than the upper limit weight corresponding to the conveying speed. An operation of the weighing and conveying apparatus according to the modified example illustrated in FIG. 8 will be described. The above steps S1, S2, and S3 are executed, and when the weighed value corresponding to the weight of the article weighed by the weighing unit 2 is greater than the upper limit weight corresponding to the conveying speed switched by the switching unit 71 (step S3: NO), the switching unit 71 automatically switches the conveying speed (step S4A).

Subsequently, the above step S2 is performed. Among the plurality of conveying speeds stored in the storage unit 8, the switching unit 71 may extract the conveying speed one level slower than the conveying speed output to the conveying control unit 72 and output the extracted speed to the conveying control unit 72. Alternatively, the switching unit 71 may extract the conveying speed corresponding to the upper limit weight exceeding the weight of the article weighed by the weighing unit 2 and output the extracted speed to the conveying control unit 72. When the weight of the article is less than the upper limit weight corresponding to the conveying speed (step S3: YES), steps S5, S6, S7, S8, and S9 are sequentially performed as illustrated in FIG. 4.

In this configuration, the article is conveyed at the conveying speed corresponding to the upper limit weight exceeding the weight of the article, so that the article can be conveyed quickly while ensuring safety.

The display unit 5 may display a warning message including information about the difference (weight difference) between the weight of the article weighed by the weighing unit 2 and the upper limit weight. The display unit 5 may also display a warning message including information about the conveying speed corresponding to the upper limit weight exceeding the weight of the article weighed by the weighing unit 2. Specifically, when the conveying speed is set to "high speed", once the upper limit weight corresponding to "medium speed" does not exceed the weight of the article weighed by the weighing unit 2, but the upper limit weight corresponding to "low speed" exceeds the weight of the article weighed by the weighing unit 2, the display unit 5 may display a warning message including details recommending that the conveying speed be set to "low speed".

### Reference Signs List

1: Weighing and conveying apparatus, 2: Weighing unit, 3: Conveying unit, 5: Display unit, 8: Storage unit, 32: Drive motor, 71: Switching unit, 72: Conveying control unit, 100: Weighing, conveying, and packaging apparatus, 101: Packaging unit

## Claims

1. A weighing and conveying apparatus (1), comprising:
a weighing unit (2) configured to weigh an article;
a conveying unit (3) configured to convey, by operating a drive motor (32), the article weighed by the weighing unit (2);
a conveying control unit (72) configured to start conveyance of the article by the conveying unit (3) when a weight of the article weighed by the weighing unit (2) is not greater than an upper limit weight at a corresponding conveying speed, or is less than the upper limit weight;
a switching unit (71) configured to switch conveying speeds of the conveying unit (3); and
a storage unit (8) configured to store the upper limit weight for each of the conveying speeds switched by the switching unit (71),
wherein
the upper limit weight stored in the storage unit (8) is a weight of the article at which a load current generated in the drive motor (32) reaches an allowable maximum load current of the drive motor (32) when the article is conveyed at the conveying speed corresponding to the upper limit weight.

2. The weighing and conveying apparatus (1) according to claim 1, wherein
the switching unit (71) is configured to switch the conveying speeds between a first conveying speed and a second conveying speed that is slower than the first conveying speed,
the storage unit (8) is configured to store a first upper limit weight and a second upper limit weight,
the first upper limit weight corresponding to the first conveying speed and being a weight at which a load current of the drive motor (32) generated during conveyance of the article at the first conveying speed reaches an allowable maximum load current of the drive motor (32), and
the second upper limit weight corresponding to the second conveying speed and being greater than the first upper limit weight and is a weight at which a load current of the drive motor (32) generated during conveyance of the article at the second conveying speed reaches the allowable maximum load current of the drive motor (32).

3. The weighing and conveying apparatus (1) according to claim 1 or 2, further comprising
a display unit (5), and
a controller (7) configured to:
determine whether or not the weight of the article is greater than the upper limit weight corresponding to the conveying speed, and
output data to the display unit based on the determination so as to indicate that a weight of the article is greater than the upper limit weight.

4. The weighing and conveying apparatus (1) according to claim 1, 2 or 3, wherein
when a weight of the article weighed by the weighing unit is greater than the upper limit weight corresponding to a third conveying speed which is the current conveying speed of the conveying unit (3), the switching unit (71) is further configured to switch the current conveying speed of the conveying unit (3) from the third conveying speed to a fourth conveying speed corresponding to an upper limit weight greater than the weight of the article.

5. The weighing and conveying apparatus (1) according to any one of claims 1 to 4, further comprising
a selection unit configured to select either a first mode or a second mode,
wherein selecting the first mode by the selection unit causes the conveying control unit (72) to execute control to start conveyance of the article by the conveying unit (3), based on the upper limit weight corresponding to one of the conveying speeds switched by the switching unit (71) and a weight of the article, and to execute control to stop the conveyance of the article, based on a load current of the drive motor (32) and a first allowable load current stored in the storage unit (8), and
selecting the second mode by the selection unit causes the conveying control unit (72) to execute control to start conveyance of the article by the conveying unit (3), based on a single upper limit weight stored in the storage unit (8) regardless of the conveying speeds switched by the switching unit (71) and to execute control to stop the conveyance of the article, based on a load current of the drive motor (32) and a second allowable load current stored in the storage unit (8) for each of the conveying speeds.

6. A weighing, conveying, and packaging apparatus (100), comprising:
the weighing and conveying apparatus (1) according to any one of claims 1 to 5; and
a packaging unit (101) disposed downstream of the conveying unit (3) with respect to the conveying direction of the conveying unit (3),
wherein the packaging unit (101) is configured to package the article with a film and discharge the packaged article.
